# EUROPÄISCHE PATENTSCHRIFT

(11) **EP 0 979 844 B1**
(45) Veröffentlichungstag und Bekanntmachung des Hinweises auf die Patenterteilung: **05.06.2002**
(21) Anmeldenummer: 99114808.1
(22) Anmeldetag: 29.07.1999
(51) Int. Cl.: C08L 71/02, C08L 33/10, C08G 81/02, C08G 65/26, C08G 65/32, C08G 65/332

(54) **Dispergiermittel zur Herstellung wässriger Pigmentpasten**
Dispersant for the production of aqueous pigment pastes
Dispersant pour produire des pâtes pigmentaires aqueuses

(30) Priorität: 11.08.1998 DE 19836253
(43) Veröffentlichungstag der Anmeldung: 16.02.2000
(73) Patentinhaber: Goldschmidt AG, 45127 Essen (DE)
(72) Erfinder: Brandt, Petra, 47169 Duisburg (DE); Esselborn, Eberhard, 45147 Essen (DE); Kaminski, Hans-Leo, 45134 Essen (DE); Knebelkamp, Arno, Dr., 45133 Essen (DE); Psiorz, Christian, Dr., 45136 Essen (DE); Silber, Stefan, Dr., 47804 Krefeld (DE); Wallhorn, Ellen, 45239 Essen (DE)

(56) Entgegenhaltungen:
- EP-A- 0 613 910
- EP-A- 0 622 378
- US-A- 5 721 321

## Beschreibung

Die Erfindung betrifft Polymethacrylsäureester, die mit Polyetherdiolen umgeestert oder mit Polyetherdiaminen amidiert und anschließend endfunktionalisiert werden sowie deren Verwendung als Dispergiermittel zur Herstellung wäßriger Pigmentpräparationen.

Um die Dispergierung von Feststoffen in flüssigen Medien zu erleichtern und zu verbessern, werden üblicherweise Dispergiermittel eingesetzt, die gleichzeitig auch stabilisierend auf die erhaltenen Dispersionen wirken sollen und eine Reagglomerierung oder Flockung der Feststoffteilchen verhindern sollen. Die Dispergiermittel fördern als oberflächenaktive Mittel die Benetzung der zu dispergierenden Feststoffteilchen und erleichtern das Aufbrechen von Agglomeraten.

Von besonderer Bedeutung sind sie beispielsweise für die Dispergierung von Pigmenten bei der Herstellung von Druckfarben, Anstrichfarben und Lacken und bei der Pigmentierung von Kunststoffmassen.

Darüber hinaus können spezielle Dispergiermittel als Compatibilizer die Verträglichkeit zwischen chemisch unterschiedlichen Polymertypen erhöhen. Dies ist z. B. für die Herstellung von SMC- bzw. BMC-Formmassen von besonderer Bedeutung.

Netz- und Dispergiermittel erleichtern bei der Herstellung von Farben und Lacken die Einarbeitung von Pigmenten und Füllstoffen, die als wichtige Formulierungsbestandteile das optische Erscheinungsbild und die physikalisch-chemischen Eigenschaften von Beschichtungen wesentlich bestimmen. Für eine optimale Ausnutzung müssen diese Feststoffe zum einen gleichmäßig in Lacken und Farben verteilt werden, zum anderen muß die einmal erreichte Verteilung stabilisiert werden. Während der Herstellung und Verarbeitung von wäßrigen Pigmentpasten können nun zahlreiche Probleme auftreten:
- schwierige Einarbeitung der Pigmente, schlechte Benetzung
- hohe Viskositäten von Farbpasten, Farben und Lacken
- Sedimentbildung
- vertikales Ausschwimmen von Pigmenten (flooding)
- horizontales Ausschwimmen von Pigmenten (floating)
- geringer Glanzgrad
- geringes Deckvermögen
- ungenügende Farbstärke
- schlecht reproduzierbare Farbtöne, Farbtonwanderung
- zu hohe Ablaufneigung von Lacken

Es fehlt daher nicht an Versuchen, wirksame Dispergieradditive für Feststoffe, insbesondere Pigmente, zur Verfügung zu stellen. So werden beispielsweise wasserlösliche, hydrophile Polyetherketten aufweisende Polyisocyanat-Additionsprodukte (EP-A-0 731 148), saure Poly(meth)acrylate (US-A-3 980 602, WO-A-94/21701), Phosphatester von Polyalkylenoxid-Block-Polyestern (WO-A-97/19948) oder alternierende Copolymere aus Vinylmonomeren und Dicarbonsäurediestern (WO-A-96/14347, EP-A-0 791 024), insbesondere Copolymere auf Basis von Maleinsäurederivaten und Vinylmonomeren zu diesem Zwecke beschrieben.

Jedoch sind mit dem Einsatz solcher Produkte auch eine Vielzahl von Nachteilen verbunden. So sind häufig hohe Gehalte an Dispergieradditivzusätzen erforderlich, die erreichbaren Pigmentierungshöhen der Pasten sind unbefriedigend niedrig, die Stabilität der Pasten und damit deren Viskositätskonstanz ist unzureichend, Flockulation und Aggregation lassen sich nicht immer vermeiden; vielfach mangelt es auch an der Farbtonkonstanz nach Lagerung der Pasten sowie an der Kompatibilität zu diversen Bindemitteln. Durch den Einsatz bekannter Dispergieradditive wird in vielen Fällen auch die Wasserfestigkeit oder Lichtbeständigkeit von Beschichtungen negativ beeinflußt, zudem der bei der Herstellung und Verarbeitung entstehende, unerwünschte Schaum zusätzlich stabilisiert. Auch wird- bedingt durch mangelnde Verträglichkeit der Dispergierharze in vielen Auflackgütern - vielfach in unerwünschter Weise der Glanz beeinträchtigt.

Insbesondere die Phosphorsäureester von amphiphilen Blockcopolymeren sind durch mangelnde Hydrolysestabilität der Phosphorestergruppierung gekennzeichnet. Auch die Wasserbeständigkeit hiermit hergestellter Beschichtungen wird negativ beeinflußt. Außerdem erfordern diese sauren Phosphorsäureester in der Regel einen in der benötigten Menge unerwünschten aminbasischen Zusatz, um z. B. den optimierten pH-Wert eines Lacksystems einzustellen.

Der vorliegenden Erfindung liegt daher die Aufgabe zugrunde, eine Vielzahl der genannten Nachteile zu überwinden, wobei die für die Verarbeitbarkeit wichtige Viskositätsstabilität der Pasten, die weitgehende Vermeidung von Flockulation und Aggregation, die Farbtonkonstanz nach Lagerung der Pasten sowie die Wasserfestigkeit daraus hergestellter Beschichtungen positiv beeinflußt werden sollten.

Darüber hinaus soll mit diesen Produkten die Kompatibilität chemisch unverträglicher Substanzen verbessert werden.

Die Aufgabe wird überraschenderweise erfindungsgemäß gelöst durch Dispergiermittel auf Basis von Block-Polymethacrylsäureester-Block-Polyalkylenoxid-Copolymeren mit terminaler Carbonsäure der allgemeinen Formel I 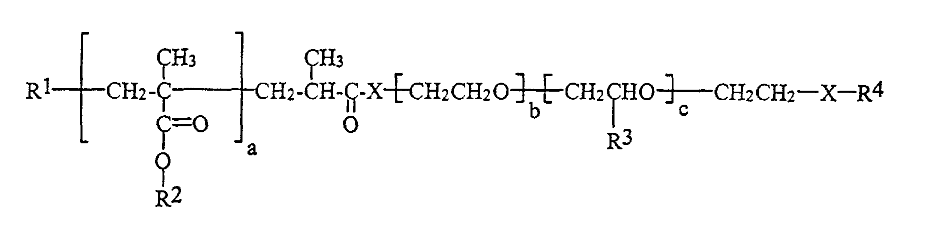 wobei
- R¹: der Rest eines an sich bekannten Kettenreglers oder Initiators ist, der frei von aktiven Wasserstoffatomen ist,
- R²: gleich oder verschieden sind und Alkylreste mit 1 bis 22 Kohlenstoffatomen oder ggf. auch substituierte Arylreste, Perfluoralkyl- oder Dialkylaminoreste bedeuten,
- R³: gleich oder verschieden sind und Alkylreste mit 1 bis 4 Kohlenstoffatomen oder Phenylreste bedeuten,
- R⁴: einen organischen Rest mit mindestens einer Carbonsäure- bzw. Carboxylatfunktion darstellt,
- X: Sauerstoff oder NH ist,
- a: einen Wert von 4 bis 20,
- b: einen Wert von 20 bis 100 und
- c: einen Wert von 0 bis 20 hat, wobei das Verhältnis b/c >= 4 ist.

Der Rest R¹ ist ein an sich bekannter Kettenregler oder Initiator. Als dem Stand der Technik entsprechend seien Azoverbindungen oder Peroxide beispielhaft genannt. Beispiele für Kettenregler sind Mercaptane, Chloroform, Isopropylbenzol oder Isopropanol. Bevorzugt für R¹ ist der Rest -S-C₁₂H₂₅. Weitere Beispiele für Reste, die vom Kettenregler herrühren, sind der von tert.-Dodecylmercaptan abgeleitete Rest und der Octadecyl- und Tetradecylmercaptanrest.

R² ist vorzugsweise ein Methyl- oder Butylrest. Beispiele geeigneter Perfluoralkylreste sind der Trifluorethyl-, Pentafluorpropyl-, Nonafluorhexyl- und der Tridecafluoroctylrest.

X ist ein Sauerstoffatom, wenn man α,ω-Polyalkoxyetherdiole einsetzt, und eine NH-Gruppe, wenn man α,ω-Polyetherdiamine verwendet.

R³ ist eine Alkyl- oder Arylgruppe, vorzugsweise eine Methyl- oder Phenylgruppe.

Die Indices b und c können gleich oder verschieden sein und liegen üblicherweise bei b im Bereich von 20 bis 100 und bei c im Bereich von 0 bis 20. Das Verhältnis von b : c ist dabei vorzugsweise ≥ 4. Die unterschiedlichen Alkoxyeinheiten können blockweise oder aber auch statistisch in der Polyalkoxykette eingebaut sein. Beispiele für geeignete Alkoxylierungsmittel sind Ethylencarbonat, Propylencarbonat, Styroloxid, Butylenoxid, vor allem Propylenoxid und insbesondere Ethylenoxid sowie deren Gemische.

Der Rest R⁴ enthält mindestens eine Carbonsäure- oder mindestens eine Carboxylateinheit. Beispiele für R⁴ sind alle Produkte, die aus der Umsetzung von einem Alkohol mit Anhydriden resultieren. Bevorzugte Anhydride sind Bernsteinsäureanhydrid, Maleinsäureanhydrid, Phthalsäureanhydrid oder Trimellitsäureanhydrid. In analoger Weise bilden sich für den Fall X = NH die analogen Halbamidverbindungen.

Beispiele für R⁴:

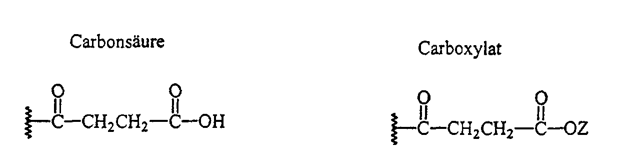

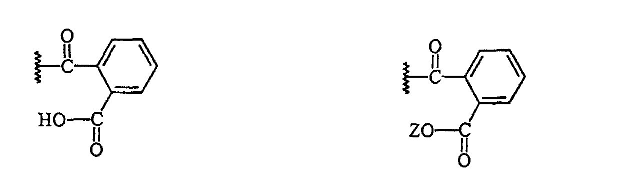

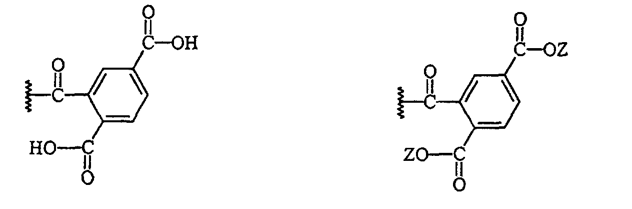

Z ist ein Kation. Vorzugsweise ist Z ein Alkali- oder Ammoniumrest, der gegebenenfalls alkylsubstituiert sein kann. Beispiele solcher substituierter Ammoniumreste sind die Reste NH(CH₃)₃-, NH(C₂H₅)₃- und NH(CH₂-C₆H₅)(CH₃)₂. Es können darüber hinaus die aus dem Stand der Technik für Carbonsäure-Gruppen bekannten Kationen ausgewählt werden (z. B. Neutralisation mit Aminen oder Aminoalkoholen, wie Triethanolamin, Aminomethylpropanol oder Dimethylethanolamin).

Beispiele erfindungsgemäßer Blockcopolymerer sind:

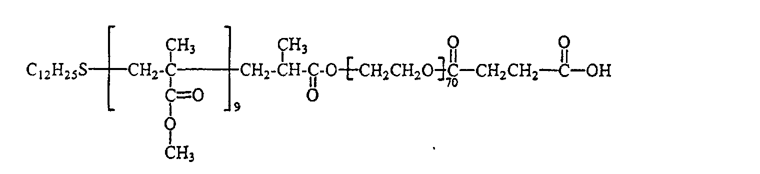

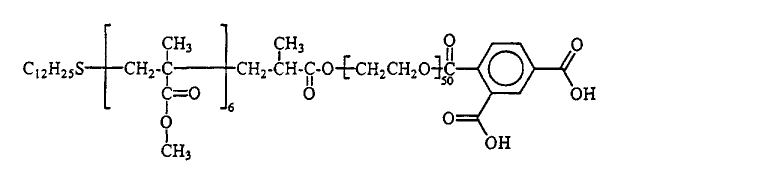

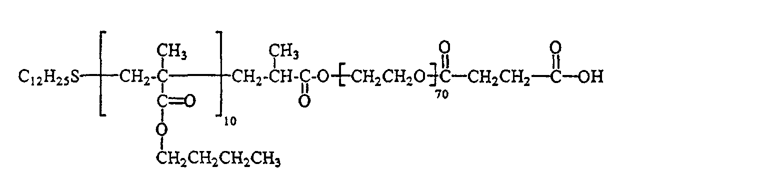

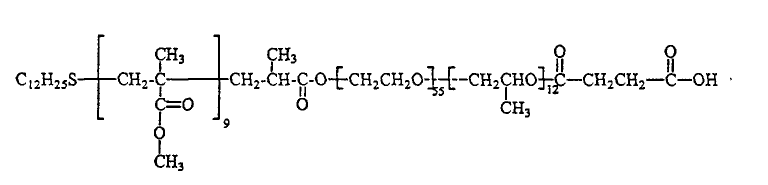

Zur Herstellung solcher Block-Copolymerer mit terminaler Carbonsäure wird zuerst das Block-Polymethacrylsäureester-Block-Polyalkylenoxid-Copolymer mit terminaler Hydroxy- oder Aminogruppe hergestellt und anschließend anionisch endfunktionalisiert.

Die Herstellung von Polymethacrylat-Block-Polyalkylenoxid mit terminaler Hydroxygruppe ist literaturbekannt. Beispielsweise wird in Macromolecules (1992), 25 (25), 6733-6738, Polym. J. (1980), 12 (3), 183-192, in der Patentliteratur (DD-C-0 221 742) oder in Makromol. Chem., Rapid Commun. (1984), 5 (9), 615-618 die Herstellung solcher Blockcopolymerer über anionische Polymerisation von Methylmethacrylat und Ethylenoxid mittels Organolithiuminitiatoren beschrieben. Großtechnisch sind solche Verfahren kaum durchführbar. Zum einen wird eine extrem hohe Anforderung an die Reinheit der Reaktanden und eventuell verwendeter Lösungsmittel gestellt, zum anderen werden meist sehr tiefe Reaktionstemperaturen (um -78 °C) benötigt. Der Einsatz spezieller, empfindlicher Alkalimetallinitiatoren (Kaliumnaphthalid oder Diphenylmethylkalium) erschwert die Reaktionsdurchführung zusätzlich.

Alternativ können Blockcopolymere, ausgehend von Polyalkylenoxid und Methacrylatmonomeren, durch Redoxpolymerisation auf Basis von Ce4+ hergestellt werden. In der Literatur ist dazu eine Vielzahl von Beispielen aufgeführt, wie z. B. in Angew. Makromol. Chem. (1997) 245, 9-22. Hauptnachteil dieser Reaktion ist, daß Cer(IV)ammoniumnitrat sehr teuer ist und in äquimolaren Mengen eingesetzt werden muß. Zudem weist es ein sehr hohes Molekulargewicht (MG 548.23) auf, wodurch bei einem Mol PEG3000 bereits ungefähr 1,1 kg Cer(IV)ammoniumnitrat eingesetzt werden müßte.

Die präparativ einfachste Möglichkeit Block-Polymethacrylsäureester-Block-Polyalkylenoxid-Copolymere herzustellen, ist in EP-A-0 613 910 beschrieben. Dort wird die Endgruppenumesterung von Polymethacrylsäureestern mit unterschiedlichsten Alkoholen beschrieben. Diese Methode ist prinzipiell nicht nur auf Monoalkohole begrenzt, sondern es können auch dihydroxyfunktionelle Verbindungen verwendet werden, wie bereits in EP-A-0 622 378 beschrieben wurde.

In keinem dieser Patente ist jedoch eine weitere Umsetzung der endständigen Hydroxygruppen mit Anhydriden zu Polymethacrylsäureester-Block-Polyalkylenoxid-Verbindungen mit terminaler Carboxyfunktion beschrieben worden. Überraschenderweise wurde gefunden, daß die gewünschten endfunktionalisierten Blockcopolymeren durch eine Eintopfreaktion in sehr einfacher Weise hergestellt werden können.

Hierbei wird zuerst ein durch radikalische Polymerisation in Gegenwart eines Kettenreglers erhaltener Polymethacrylsäureester mit α,ω-difunktionellen Polyethern bei Temperaturen von 70 bis 150 °C, vorzugsweise 100 bis 120 °C umgeestert. Die Reaktion kann mit oder ohne Lösungsmittel durchgeführt werden. In der Regel werden zuerst zur Entfernung etwaiger vorhandener Feuchtigkeitsspuren mit einem inerten Lösungsmittel, wie beispielsweise Toluol oder Xylol, Reste von Wasser aus dem System entfernt. Um den bei der Umesterungsreaktion freigesetzten Alkohol (je nach verwendetem Polymethacrylat z. B. Methanol oder Butanol) einfacher aus dem Reaktionsgemisch zu entfernen, ist die Zugabe eines inerten Lösungsmittels, wie Toluol, Xylol oder einer Benzinfraktion mit einem Siedebereich von 70 bis 140 °C empfehlenswert. Dem Stand der Technik entsprechende Lewis-Umesterungskatalysatoren, wie beispielsweise Alkyltitanat, Alkylzirkonat, Dialkylzinnacetathalogenid oder Dialkylzinndialkylester, können in Mengen von 0,1 bis 3 Gew.-%, bezogen auf den Polymethacrylsäureester, verwendet werden. Besonders geeignete Katalysatoren sind Isopropyltitanat, Dibutylzinnacetatchlorid oder Dibutylzinnoxid. Das molare Verhältnis von Polymethacrylsäureester zu Polyalkylenoxid kann 1 : 0,5 bis 1 : 3, vorzugsweise 1 : 1 betragen. Hauptnebenreaktion ist die Bildung des Triblockcopolymers Polymethacrylsäureester-Block-Polyalkylenoxid-Block-Polymethacrylsäureester, das nicht aus dem Reaktionsgemisch entfernt wird. Der Anteil des Nebenproduktes wird stark vom Polymethacrylsäureester/Polyalkylenoxid-Verhältnis beeinflußt. Der Umsatz kann u. a. durch OH-Zahl-Bestimmung verfolgt werden.

Nach vollständigem Umsatz kann die anionische Modifizierung in an sich bekannter Weise erfolgen. Dazu wird das entsprechende Anhydrid hinzugegeben und das Reaktionsgemisch bei einer Temperatur von 70 bis 150 °C, vorzugsweise 100 bis 120 °C, erhitzt. Das Molverhältnis Anhydrid zu vorhandenen Hydroxygruppen kann 2 : 1 bis 1 : 10, vorzugsweise 1 : 1, betragen. Alle kommerziell erhältlichen Anhydride können eingesetzt werden. Geeignete Anhydride sind z. B. Bernsteinsäureanhydrid, Maleinsäureanhydrid, Phthalsäureanhydrid oder Trimellitsäureanhydrid. Das Ende der Reaktion kann an der verschwindenden OH- und entstehenden Säurezahl bestimmt werden. Auch andere dem Stand der Technik entsprechende Acylierungsmittel, wie Säurehalogenide oder Ester, können Verwendung finden.

Die Herstellung der Block-Polymethacrylsäureester-Block-Polyalkylenoxid-Copolymere mit terminaler Carbonsäure zur Anwendung als Dispergiermittel für wäßrige Pigmentpasten wird in den nachfolgenden Beispielen genauer erläutert.

### Beispiel 1 A

### Herstellung von Polymethylmethacrylat durch radikalische Polymerisation (nicht erfindungsgemäß)

In einem Reaktor werden 180 g Toluol unter einer Stickstoffatmosphäre auf 100 °C erwärmt. Eine Lösung aus 4,2 g Azodiisobuttersäurenitril, 202,4 g n-Dodecylmercaptan (1 Mol) und 1198 g (ca. 12 Mol) Methylmethacrylat in 170 g Toluol wird innerhalb von 3 Stunden bei 100 °C mit konstanter Geschwindigkeit zugetropft. Nach Beendigung der Reaktion wird durch Zugabe von 2,8 g Azodiisobuttersäurenitril innerhalb von 1 Stunde nachinitiiert und anschließend läßt man noch 1 Stunde nachreagieren. Restmonomere und Lösungsmittel werden bei 150 °C im Ölpumpenvakuum (1 Torr) entfernt und das klare, viskose Produkt durch Zugabe von Toluol auf einen Festkörpergehalt von 70 % verdünnt. Aus der gelchromatographischen Untersuchung ergibt sich für das erhaltene Polymerisat ein Mₙ-Wert (Eichung gegen PMMA/THF) von 1710 bei einem M_{w}/Mₙ-Verhältnis von 1,56. Der Restmonomerengehalt ist < 0,1 %.

### Beispiele 2 A und 3 A

### Herstellung von Polymethylmethacrylaten mit unterschiedlichen Molekulargewichten durch radikalische Polymerisation (nicht erfindungsgemäß)

Es wird grundsätzlich wie in Beispiel 1 A verfahren mit dem Unterschied, daß, wie aus Tabelle 1 hervorgeht, die Menge an n-Dodecylmercaptan und die Initiatormenge variieren.

**Tabelle 1:**

| Polymethylmethacrylat Bspl.Nr. | Methacrylat [g]/[Mol] | n-Dodecylmercaptan [g] | Initiatormenge [g] | Molekulargewicht (GPC) Mₙ | Uneinheitlichkeitsfaktor |
|---|---|---|---|---|---|
| 2 A | 898 / 9 | 202 | 3,3 | 1345 | 1,50 |
| 3 A | 598 / 6 | 202 | 2,4 | 945 | 1,45 |

### Beispiel 4 A

### Herstellung von Poly-n-butylmethacrylat durch radikalische Polymerisation (nicht erfindungsgemäß)

Es wird grundsätzlich wie in Beispiel 1 A verfahren mit dem Unterschied, daß anstelle von 12 Moläquivalenten Methylmethacrylat nun 10 Moläquivalente n-Butylmethacrylat auf 1 Mol n-Dodecylmercaptan eingesetzt werden.

Aus der gelchromatographischen Untersuchung ergibt sich für das erhaltene Polymerisat ein Mₙ-Wert (Eichung gegen PMMA/THF) von 2150 bei einem M_{w}/Mₙ-Verhältnis von 1,78. Der Restmonomerengehalt ist < 0,1 %.

### Beispiel 5 A

### Herstellung eines Polystyrol-Block-Polyalkylenoxid-Copolymeren (nicht erfindungsgemäß; analog DE-A-41 34 967)

100 g Xylol werden unter einer Stickstoffatmosphäre in einem mit einem Rührer versehenen Reaktor auf 120 °C erhitzt. Dazu wird innerhalb von 3 Stunden unter Beibehaltung der Temperatur von 120 °C ein Gemisch aus 2288 g (etwa 22 Mol) Styrol, 78 g (1 Mol) 2-Mercaptoethanol, 4,1 g Azodiisobuttersäuredinitril und 310 g Xylol gegeben. Nach Beendigung der Zugabe erfolgt eine Nachreaktion von etwa 15 Minuten; anschließend werden 0,16 g Methylhydrochinon zugegeben.

Durch Destillation im Vakuum werden überschüssiges Monomer, Xylol und Restmengen 2-Mercaptoethanol entfernt und das verbleibende farblose, viskose Produkt abschließend mit Xylol auf einen Festkörpergehalt von etwa 80 % verdünnt.

Über die Hydroxylzahlbestimmung ergibt sich ein Molekulargewicht Mₙ von 1100 g/Mol. Aus der dampfdruckosmometrischen Molekulargewichtsbestimmung wird ein Wert von 1200 g/Mol erhalten. Aus der gelchromatographischen Untersuchung ergibt sich für das erhaltene Polymerisat ein Mₙ-Wert (Eichung gegen Polystyrol/THF) von 1175 bei einem M_{w}/Mₙ-Verhältnis von 1,75. Der Restmonomerengehalt ist < 0,1 %.

Die Lösung von 1100 g (etwa 1 Mol) des ω-hydroxyfunktionellen Polystyrols in 200 g Xylol und 35,0 g Kaliummethylat (etwa 0,5 Mol) werden in einen gut getrockneten Edelstahlreaktor gegeben, der zusätzlich mit einem Rührer versehen ist. Durch azeotrope Destillation werden sowohl Spuren von Wasser als auch Methanol zusammen mit Xylol entfernt. Danach wird auf eine Temperatur von 80 °C eingestellt und etwa 3000 g Ethylenoxid (etwa 70 Mol) unter Rühren so schnell zugegeben, daß die Reaktorinnentemperatur 85 °C nicht überschreitet. Nach vollständiger Einleitung wird mit 100 g Wasser versetzt und anschließend mit 30 % Phosphorsäure auf einen pH-Wert von 6 bis 7 gebracht. Die Entfernung des Wassers erfolgt durch azeotrope Destillation im Vakuum und die des ausfallenden Salzes durch Filtration.

Das aus der Bestimmung der Hydroxylzahl ermittelte Molekulargewicht bei einer angenommenen Funktionalität von 1 beträgt 13,8 mg KOH/g Polymer; das Gelpermeationschromatogramm zeigt nur ein Maximum und ergibt für Mₙ (Eichung gegen Polystyrol) einen Wert von 2880, für das Verhältnis M_{w}/Mₙ erhält man 1,21.

### Beispiele 1 B bis 4 B

### (nicht erfindungsgemäß)

Die in den erfindungsgemäßen und nichterfindungsgemäßen Beispielen verwendeten Polyetherdiole werden, ausgehend von Ethylenglycol als Startalkohol, durch alkalisch katalysierte Homopolymerisation von 70 bzw. 55 Mol Ethylenoxid bzw., ausgehend von Propylenoxid, durch blockweise, gleichfalls alkalisch katalysierte Copolymerisation von Propylenoxid (12 bzw. 17 Mol) und Ethylenoxid (55 bzw. 23 Mol) hergestellt.

**Tabelle 2:**

| Beispiel Nr. | PEG Molekulargewicht | EO/PO |
|---|---|---|
| 1 B | 3000 | rein EO |
| 2 B | 2200 | rein EO |
| 3 B | 3100 | 55/12 |
| 4 B | 2000 | 23/17 |

### Beispiel 1 C

### Herstellung von Block-Polymethacrylsäureester-Block-Polyalkylenoxid-Copolymeren (nicht erfindungsgemäß)

1400 g (ca. 1 Mol) des Polymethylmethacrylates aus Beispiel 1 A (70 %ige Lösung in Toluol), 3000 g (ca. 1 Mol) des Polyethers aus Beispiel 1 B werden unter einer Stickstoffatmosphäre in einem Reaktor auf 120 °C erwärmt und das Lösungsmittel unter gleichzeitiger Entfernung von Wasserspuren abdestilliert. Dann werden bei 100 °C 22 g (0,5 Gew.-%) Isopropyltitanat zugegeben und das bei der einsetzenden Reaktion entstehende Methanol mehrere Stunden lang bei 120 °C und 2 mm Hg abdestilliert. Durch gaschromatographische Untersuchung des Destillats hinsichtlich der enthaltenen Methanolmenge, aber auch durch Ermittlung der OH-Zahl läßt sich der Reaktionsverlauf verfolgen. Nach ungefähr 8 Stunden ist der Umsatz quantitativ und man erhält ein gelbes, bei Raumtemperatur festes Produkt. Die OH-Zahl beträgt 12,9 mg KOH/g Polymer. Aus der gelchromatographischen Untersuchung ergibt sich für das erhaltene Polymerisat ein Mₙ-Wert (Eichung gegen PMMA/THF) von 8730 bei einem M_{w}/Mₙ-Verhältnis von 1,15.

Tabelle 3 zeigt weitere Beispiele für die Synthese von Block-Polymethacrylsäureester-Block-Polyalkylenoxid-Copolymeren, wie sie nach dem obigen Herstellverfahren erhalten werden.

**Tabelle 3:**

| Bspl. Nr. | Polymethacrylat Bspl. / [g] | PEG Bspl. / [g] | Molekulargewicht (GPC) Mₙ | Uneinheitlichkeitsfaktor | mg KOH / g Polymer |
|---|---|---|---|---|---|
| 2 C | 2 A / 1100 | 1 B / 3000 | 8150 | 1,21 | 13,9 |
| 3 C | 3 A / 800 | 2 B / 2200 | 7440 | 1,25 | 19,0 |
| 4 C | 4 A /1600 | 1 B / 3000 | 8900 | 1,31 | 12,3 |
| 5 C | 2 A / 1100 | 3 B / 3100 | 7910 | 1,35 | 13,5 |
| 6 C | 1 A / 1400 | 4 B / 2000 | 7690 | 1,27 | 16,8 |

### Beispiel 1 D

### Herstellung von Block-Polymethacrylsäureester-Block-Polyalkylenoxid-Copolymeren mit terminaler Carboxygruppe (erfindungsgemäß)

Im direkten Anschluß an der Synthese des Block-Polymethacrylsäureester-Block-Polyalkylenoxids 1 C werden 98 g (ca. 1 Mol) Maleinsäureanhydrid bei 120 °C hinzugefügt. Nach etwa 2 Stunden ist die Reaktion beendet. Die Säurezahl des erhaltenen Materials beträgt 12,4 mg KOH/g Polymer.

Tabelle 4 zeigt weitere Beispiele für die Umsetzung von Block-Polymethacrylsäureester-Block-Polyalkylenoxid-Copolymeren mit unterschiedlichsten Anhydriden, wie sie nach dem obigen Herstellverfahren erhalten werden.

**Tabelle 4:**

| Bspl. Nr. | Polymethacrylat Bspl. / [g] | PEG Bspl. / [g] | Anhydrid | SZ mg KOH / g Polymer |
|---|---|---|---|---|
| 2 D | 2 A / 1100 | 1 B / 3000 | BSA | 13,5 |
| 3 D | 3 A / 800 | 2 B / 2200 | TSA | 17,2 |
| 4 D | 4 A /1600 | 1 B / 3000 | BSA | 12,1 |
| 5 D | 2 A / 1100 | 3 B / 3100 | BSA | 12,5 |
| 6 D * | 1 A / 1400 | 4 B / 2000 | BSA | 15,5 |

| | | | | |
|---|---|---|---|---|
| * nicht erfindungsgemäß | | | | |

### Beispiel 7 D

### Umsetzung von Bernsteinsäureanhydrid (BSA) mit Polystyrol-Block-Polyalkylenoxid-Copolymeren 5 A (nicht erfindungsgemäß)

Die anionische Modifikation erfolgt analog 1 D, nur daß man diesmal direkt nach der Synthese von 5 A 1 Moläquivalent Bernsteinsäureanhydrid hinzufügt. Nach einer Reaktionszeit von 2 Stunden bei 120 °C kann man das Ende der Reaktion anhand der Säurezahl von 12,8 mg KOH/g Polymer ermitteln.

### Beispiel 8 D

### Herstellung des Phosphorsäureesters von Polystyrol-Block-Polyalkylenoxid-Copolymeren 5 A (nicht erfindungsgemäß)

4100 g (entspricht 1 OH-Äquivalent) des Blockcopolymeren 5 A werden im Reaktor vorgelegt und nach Zugabe von etwa 200 ml Toluol auf 120 °C erhitzt. Durch Anlegen von Vakuum werden alle flüchtigen Anteile, insbesondere eventuell im Produkt vorhandenes Wasser, aus dem Reaktionsraum destillativ entfernt. Nach dem Belüften mit Stickstoff temperiert man auf 80 °C und gibt 85 g der flüssigen Polyphosphorsäure (0,25 Mol P₄O₁₀; Hersteller: Merck, Gehalt als P₄O₁₀ berechnet: ca. 85 %) hinzu. Nach 2 Stunden ist die Reaktion abgeschlossen. Die Säurezahl des erhaltenen Materials beträgt 26,8 mg KOH/g. Im ¹H-NMR-Spektrum ist keine aliphatische Hydroxylgruppe mehr nachweisbar.

### Beispiel 9 D

### Herstellung des Phosphorsäureesters vom Polymethacrylsäureester-Block-Polyalkylenoxid-Copolymeren 1 C (nicht erfindungsgemäß)

Die Umsetzung mit Polyphosphorsäure erfolgt analog 8 D, nur daß man diesmal direkt nach der Synthese von 1 C anstelle eines Anhydrids 0,25 Mol P₄O₁₀ hinzufügt. Das Ende der Reaktion ist anhand der Säurezahl von 25 mg KOH/g Polymer erkennbar.

Zur Herstellung wäßriger Pigmentpasten werden 0,1 bis 100 Gew.-% der erfindungsgemäßen Block-Polymethacrylsäureester-Block-Polyalkylenoxid-Copolymeren mit terminaler Carbonsäure, vorzugsweise 0,5 bis 50 Gew.-% (bezogen auf das Gewicht der Pigmente), verwendet. Die erfindungsgemäßen Copolymeren können entweder vorab mit den zu dispergierenden Pigmenten vermischt werden oder direkt in dem Dispergiermedium (Wasser, eventuelle Glycolether-Zusätze) vor oder gleichzeitig mit der Zugabe der Pigmente und etwaiger anderer Feststoffe gelöst werden.

Zur Herstellung wäßriger, hochkonzentrierter, pump- und fließfähiger Pigmentpräparationen wird das erfindungsgemäß zu verwendende Polymer, gegebenenfalls in Kombination mit mindestens einer weiteren Komponente, mit Wasser vermischt, in dieser Mischung das Pigment unter Rühren eingestreut und bis zur Erzielung der gewünschten Feinheit und Konsistenz der Suspension dispergiert.

Eine weitere Methode zur Herstellung der erfindungsgemäßen Pigmentpräparationen besteht darin, ein Pigment mit den erfindungsgemäßen Copolymeren zunächst trocken zu vermischen, woraus eine pulverförmige Pigmentzubereitung resultiert. Diese kann bei Bedarf in Wasser dispergiert werden, wobei die erfindungsgemäße Pigmentpräparation erhalten wird.

Eine dritte Methode zur Herstellung wäßriger, hochkonzentrierter, pump- und fließfähiger Pigmentsuspensionen und -pasten besteht darin, einen wäßrig-feuchten Pigmentfilterkuchen mit dem erfindungsgemäßen Copolymer zu versetzen und beispielsweise mit einem Dissolver in den Pigmentfilterkuchen einzuarbeiten, wobei dieser sich verflüssigt.

Als Beispiele für zu dispergierende Pigmente seien genannt:
- Monoazopigmente:
   C.I. Pigment Brown 25;
   C.I. Pigment Orange 5, 36 und 67;
   C.I. Pigment Red 1, 2 ,3 ,48:4, 49, 52:2, 53, 57:1, 251, 112, 170 und 184;
   C.I. Pigment Yellow 1, 3, 73, 74, 65, 97,151 und 183;
- Diazopigmente:
   C.I. Pigment Orange 34;
   C.I. Pigment Red 144 und 166
   C.I. Pigment Yellow 12,13,17,83,113 und 126;
- Anthrachinonpigmente:
   C.I. Pigment Yellow 147 und 177;
   C.I. Pigment Violet 31;
- Anthrapyrimidinpigmente:
   C.I. Pigment Yellow 108;
- Chinacridonpigmente:
   C.I.Pigment Red 122,202 und 20;
   C.I.Pigment Violet 19;
- Chinophthalonpigmente:
   C.I.Pigment Yellow 138;
- Dioxazinpigmente:
   C.I.Pigment Violet 23 und 27;
- Flavanthronpigmente:
   C.I. Pigment Yellow 24;
- Indanthronpigmente:
   C.I. Pigment Blue 60 und 64;
- Isoindolinpigmente:
   C.I. Pigment Orange 69;
   C.I. Pigment Red 260;
   C.I. Pigment Yellow 139;
- Isoindolinonpigmente:
   C.I. Pigment Orange 61;
   C.I. Pigment Red 257 und 260
   C.I. Pigment Yellow 109,110,173 und 185;
- Metallkomplexpigmente: C.I. Pigment Yellow 117 und 153;
- Perinonpigmente:
   C.I. Pigment Orange 43;
   C.I. Pigment Red 194;
- Perylenpigmente:
   C.I. Pigment Black 31 und 32;
   C.I. Pigment Red 123,149,178,179,190 und 224;
   C.I. Pigment Violet 29;
- Phtalocyaninpigmente:
   C.I. Pigment Blue 15, 15:1, 15:2,15:3, 15:4, 15:6 und 16;
   C.I. Pigment Green 7 und 36;
- Pyranthronpigmente:
   C.I. Pigment Orange 51;
   C.I. Pigment Red 216;
- Thioindigopigmente:
   C.I. Pigment Red 88;
- Triphenylmethanpigmente:
   C.I. Pigment Blue 1,61, und 62;
   C.I. Pigment Green 1;
   C.I. Pigment Red 81 und 169;
   C.I. Pigment Violet 2 und 3;
- C.I. Pigment Black 1 (Anilinschwarz)
- C.I.Pigment Yellow 101 (Aldazingelb)
- Anorganische Pigmente:
- Weißpigmente:
   Titandioxid (C.I. Pigment White 6), Zinkweiß, Farbenzinkoxid; Zinksulfid, Lithopone; Bleiweiß;
- Schwarzpigmente:
   Eisenoxidschwarz (C.I. Pigment Black 11), Eisen-Mangan-Schwarz, Spinellschwarz (C.I.Pigment Black 27); Ruß (C.I. Pigment Black 7) ;
- Buntpigmente:
   Chromoxid, Chromoxidhydratgrün; Chromgrün (C.I. Pigment Green 48); Cobaltgrün (C.I.Pigment Green 50); Ultramaringrün;
   Kobaltblau (C.I. Pigment Blue 28 und 36); Ultramarinblau; Eisenblau (C.I. Pigment Blue 27); Manganblau;
   Ultramarinviolett; Kobalt- und Manganviolett;
   Eisenoxidrot (C.I. Pigment Red 101); Cadmiumsulfoselenid (C.I. Pigment Red 108);
   Molybdatrot (C.I. Pigment Red 104); Ultramarinrot;
   Eisenoxidbraun, Mischbraun, Spinell- und Korundphasen (C.I. Pigment Brown 24, 29 und 31),
   Chromorange;
   Eisenoxidgelb (C.I. Pigment Yellow 42);
   Nickeltitangelb (C.I. Pigment Yellow 53;
   C.I. Pigment Yellow 157 und 164); Chromtitangelb, Cadmiumsulfid und Cadmiumzinksulfid,(C.I. Pigment Yellow 37 und 35);
   Chromgelb (C.I. Pigment Yellow 34), Zinkgelb, Erdalkalichromate, Neapelgelb, Bismutvanadat (C.I. Pigment Yellow 184);
- Glanzpigmente:
   Metalleffektpigmente auf Basis metalloxidbeschichteter Metallplättchen; Perglanzpigmente auf der Basis metalloxidbeschichteter Glimmerplättchen.

Füllstoffe, die beispielsweise in wäßrigen Lacken dispergiert werden können, sind z. B. solche auf Basis von Kaolin, Talkum, anderen Silikaten, Kreide, Glasfasern, Glasperlen oder Metallpulvern.

Als Lacksysteme, in denen die erfindungsgemäßen Pigmentpräparationen aufgelackt werden können, kommen beliebige wäßrige 1K-oder 2K-Lacke in Betracht. Beispielhaft genannt seien wäßrige 1K-Lacke, wie beispielsweise solche auf Basis von Alkyd-, Acrylat-, Epoxid-, Polyvinylacetat-, Polyester- oder Polyurethanharzen, oder wäßrige 2K-Lacke, beispielsweise solche auf Basis von hydroxylgruppenhaltigen Polyacrylat- oder Polyesterharzen mit Melaminharzen oder gegebenenfalls blockierten Polyisocyanatharzen als Vernetzer. In gleicher Weise seien auch Polyepoxidharzsysteme genannt.

Wasser ist das bevorzugte Lösemittel für die erfindungsgemäßen Copolymeren. Aber auch organische Lösemittel, wie beispielsweise Glycolether oder -ester, können allein oder im Gemisch mit Wasser verwendet werden. Insbesondere für das Antrocknungsverhalten der mittels der erfindungsgemäßen Copolymere hergestellten Pigmentpasten ist der Zusatz von Lösemitteln vielfach vorteilhaft.

Zur Herstellung der erfindungsgemäßen Pigmentpräparationen kann zudem auch der Zusatz weiterer nichterfindungsgemäßer, wasserdispergierbarer Polymerer, wie beispielsweise von Polyacrylat-, Polyurethan- oder Polysiloxanderivaten erfolgen.

Bei der Herstellung der erfindungsgemäßen Pigmentpräparationen können zudem weitere Hilfsmittel, wie Entschäumer, Konservierungshilfsmittel, Netzmittel, Entlüfter oder dem Stand der Technik entsprechende Anti-Settling-Mittel, Wachse oder Rheologieadditive Verwendung finden.

Die als Dispergiermittel für wäßrige Pigmentpasten verwendeten Block-Polymethacrylsäureester-Block-Polyalkylenoxid-Carbonsäuren sind gemäß der allgemeinen Formel I beschrieben. Dabei haben die Indices a, b und c sowie die Reste R¹ bis R⁴ und X die in der nachfolgenden Tabelle gezeigten Bedeutungen bzw. Werte.

| Nr. | a | b | c | R¹ | R² | R³ | R⁴ | X |
|---|---|---|---|---|---|---|---|---|
| 1 | 12 | 70 | 0 | C₁₂H₂₅S | Me | - | MSA | O |
| 2 | 9 | 70 | 0 | C₁₂H₂₅S | Me | - | BSA | O |
| 3 | 6 | 50 | 0 | C₁₂H₂₅S | Me | - | TSA | O |
| 4 | 10 | 70 | 0 | C₁₂H₂₅S | Bu | - | BSA | O |
| 5 | 9 | 55 | 12 | C₁₂H₂₅S | Me | Me | BSA | O |
| | | | | | | | | |
| 6* | 12 | 70 | 0 | C₁₂H₂₅S | Me | - | H | O |
| 7* | 12 | 70 | 0 | C₁₂H₂₅S | Me | - | POx | O |
| 8* | 10 | 70 | 0 | | Styrol ! | - | POx | O |
| 9* | 10 | 70 | 0 | | Styrol ! | - | BSA | O |
| 10* | 12 | 23 | 17 | C₁₂H₂₅S | Me | Me | BSA | O |

| | | | | | | | | |
|---|---|---|---|---|---|---|---|---|
| * nicht erfindungsgemäß | | | | | | | | |

### Herstellung der Pigmentpasten

Zur Herstellung der Pigmentpasten werden die erfindungsgemäßen (1 bis 5) und nichterfindungsgemäßen (6 bis 10) Dispergieradditive 40 %ig in Wasser vorgelöst, mit Wasser und Hilfsstoffen gemischt und danach die Pigmente zugegeben. Die Dispergierung erfolgt nach Zugabe von Mahlkörpern (Glaskugeln 2 bis 3 mm, gleiches Volumen wie die Pigmentpaste) 1 (Titandioxid) bzw. 2 h (sonstige Pigmente) in einem Skandex-Rüttler mit Luftkühlung.

### Formulierung der Weißpasten

Die Weißpasten werden wie folgt formuliert (Angaben in Gew.-%) :
- 16,4: Wasser
- 12,3: Additiv-Lösung, 40%ig
- 1,0: Entschäumer (z. B. Tego Foamex 810, Tego Chemie Service GmbH)
- 70,0: Titandioxid 2160 (Kronos)
- 0,3: Aerosil A 200 (Degussa)

### Formulierung der Schwarzpasten

Die Schwarzpasten werden wie folgt formuliert (Angaben in Gew.-%):
- 60,3: Wasser
- 22,3: Additiv-Lösung, 40 %ig
- 1,0: Entschäumer (z. B. Tego Foamex 810, Tego Chemie Service GmbH)
- 1,4: AMP 90 (Angus)
- 15,0: Farbruß FW 200 (Degussa)

### Prüflacke

Einbrenn-Klarlack auf Basis eines modifizierten Alkydharzes (Angaben in Gew.-%)
- 70,88: Resydrol VWA 5477, 40%ig (Hoechst)
- 0,14: Entschäumer (z. B. Byk 020, Byk-Chemie)
- 0,68: Bentone SD 1 (Rheox)
- 8,24: Maprenal MF 900 (Hoechst)
- 0,14: Triethanolamin
- 19,10: Wasser
- 0,68: Additol XW 395 (Hoechst)
- 0,14: Additol XW 329
Position 1 vorlegen und die anderen Komponenten unter Rühren zugeben.

### Dispersions-Klarlack

- 97,0: Neocryl XK 90 (Zeneca)
- 3,0: Texanol

Zur Herstellung grau pigmentierter Lacke werden je 40,0 g Klarlack vorgelegt, 14,2 g Weißpaste sowie 2,65 g Schwarzpaste zugegeben und bei 1500 Upm 5 min homogenisiert. Die Proben werden mit 100 µm Naßfilmdicke auf Aluminium-Bleche aufgerakelt und entweder nach 20 min Ablüftzeit 15 min bei 150 °C eingebrannt (Einbrennlack) oder bei Raumtemperatur getrocknet (Dispersionslack).

### Test der Pastenstabilitäten

Zur Ermittlung der Pastenstabilitäten werden bei zwei verschiedenen Schergefällen (20 1/s sowie 1000 1/s) die erreichbaren Anfangsviskositäten sowie die Viskositäten nach vierwöchiger Lagerung bei 50 °C bestimmt.

### Weißpasten

| Probe | Viskosität/Pas sofort bei 20 1/s | Viskosität/Pas sofort bei 1000 1/s | Viskosität/Pas nach 4 Wo 50°C bei 20 1/s | Viskosität/Pas nach 4 Wo 50°C bei 1000 1/s |
|---|---|---|---|---|
| 1 | 3,0 | 0,6 | 3,4 | 0,7 |
| 2 | 2,8 | 0,5 | 3,2 | 0,7 |
| 3 | 2,7 | 0,5 | 3,0 | 0,6 |
| 4 | 3,2 | 0,5 | 3,7 | 0,5 |
| 5 | 2,5 | 0,6 | 3,0 | 0,7 |
| 6* | 2,9 | 0,7 | 5,0 | 1,1 |
| 7* | 1,9 | 0,4 | 2,5 | 0,7 |
| 8* | 2,1 | 0,4 | 2,6 | 0,6 |
| 9* | 2,6 | 0,5 | 3,8 | 0,8 |
| 10* | 4,0 | 0,8 | sedimentiert | sedimentiert |

| | | | | |
|---|---|---|---|---|
| * nicht erfindungsgemäß | | | | |

### Schwarzpasten

| Probe | Viskosität/dPas sofort bei 20 1/s | Viskostät/dPas sofort bei 1000 1/s | Viskosität/dPas nach 4 Wo 50°C bei 20 1/s | Viskosität/dPas nach 4 Wo 50 °C bei 1000 1/s |
|---|---|---|---|---|
| 1 | 2,2 | 0,6 | 2,3 | 0,6 |
| 2 | 2,0 | 0,6 | 2,2 | 0,7 |
| 3 | 2,1 | 0,6 | 2,3 | 0,6 |
| 4 | 2,5 | 0,5 | 2,7 | 0,6 |
| 5 | 2,3 | 0,7 | 2,4 | 0,7 |
| 6 | 2,3 | 0,5 | 3,5 | 0,8 |
| 7 | 2,2 | 0,6 | 2,3 | 0,6 |
| 8 | 2,2 | 0,6 | 2,5 | 0,8 |
| 9 | 2,3 | 0,5 | 2,8 | 0,7 |
| 10* | 3,0 | 0,7 | sedimentiert | sedimentiert |

| | | | | |
|---|---|---|---|---|
| * nicht erfindungsgemäß | | | | |

Aus dem jeweils nur geringen Viskositätsanstieg läßt sich die gute Stabilität der erfindungsgemäßen Pigmentpasten leicht erkennen. Bei Verwendung des nichterfindungsgemäßen Blockcopolymerisates 10 konnten keine lagerstabilen Pigmentkonzentrate formuliert werden.

### Test der Dispergiereigenschaften

Die Testformulierungen werden mit 100 µm Naßfilmdicke aufgezogen; nach sechsminütiger Trocknung erfolgt ein Rub-Out-Test auf 1/3 der beschichteten Fläche. Nach Einbrennen bzw. Trocknung über Nacht erfolgt nach jeweils 24 Stunden die farbmetrische Vermessung der Aufzüge mittels eines Spektralphotometers Typ XP 68 der Firma X-Rite. Die Bestimmungen von Glanzgrad und -schleier erfolgen mittels des Haze-Gloss-Gerätes der Firma Byk-Gardner.

### Einbrennlack auf Basis Resydrol VWA 5477

| Probe | Helligkeit L | Delta E nach Rub-Out | Glanzgrad (60°-Winkel) |
|---|---|---|---|
| 1 | 44,0 | 0,4 | 53 |
| 2 | 43,6 | 0,2 | 57 |
| 3 | 44,2 | 0,2 | 58 |
| 4 | 44,8 | 0,5 | 57 |
| 5 | 43,8 | 0,5 | 54 |
| 6 | 44,0 | 1,1 | 47 |
| 7 | 44,2 | 0,9 | 50 |
| 8 | 44,3 | 2,6 | 60 |
| 9 | 43,9 | 2,1 | 53 |
| 10 * | 41,9 | 4,6 | 41 |

| | | | |
|---|---|---|---|
| * nicht erfindungsgemäß | | | |

### Dispersionslack auf Basis Neocryl XK 90

| Probe | Helligkeit L | Delta E nach Rub-Out | Glanzgrad (60°-Winkel) | Haze |
|---|---|---|---|---|
| 1 | 48,5 | 0,3 | 40 | 110 |
| 2 | 49,0 | 0,1 | 41 | 108 |
| 3 | 49,1 | 0,3 | 40 | 107 |
| 4 | 49,5 | 0,5 | 41 | 110 |
| 5 | 49,3 | 0,5 | 38 | 106 |
| 6 | 47,8 | 0,8 | 37 | 110 |
| 7 | 48,4 | 0,8 | 43 | 105 |
| 8 | 49,5 | 0,7 | 45 | 103 |
| 9 | 49,0 | 0,9 | 40 | 110 |
| * 10 | 47,0 | 2,0 | 37 | 100 |

| | | | | |
|---|---|---|---|---|
| * nicht erfindungsgemäß | | | | |

Zu erkennen ist die durch den Einsatz der erfindungsgemäßen Dispergieradditive erzielbare günstige Farbstärkenentwicklung sowie der in allen Fällen günstige Rub-Out-Test.

### Prüfung der Wasserfestigkeit

Die eingebrannten (System Resydrol) oder 7 Tage bei Raumtemperatur luftgetrockneten (System Neocryl) grau pigmentierten Lackfilme werden 20 Stunden mit aufstehendem Wasser belastet und danach auf Oberflächendefekte (Blasenbildung/Farbtonverschiebung) sowie Erweichung beurteilt.

| Probe | Oberflächendefekte | Erweichung |
|---|---|---|
| 1 | keine | minimal |
| 2 | keine | minimal |
| 3 | keine | minimal |
| 4 | keine | minimal |
| 5 | keine | minimal |
| 6 | keine | minimal |
| 7 | deutlich | deutlich |
| 8 | deutlich | deutlich |
| 9 | keine | minimal |
| 10* | keine | minimal |

| | | |
|---|---|---|
| * nicht erfindungsgemäß | | |

Die erfindungsgemäßen Wirkstoffe führen- besonders im Vergleich zu analogen Phosphorsäure-Estern - nicht zu einer Beeinträchtigung der Wasserfestigkeit der Lackfilme.

Wie aus den vorhergehenden Vergleichen ersichtlich ist, zeichnen sich die erfindungsgemäß zu verwendenden Verbindungen durch ihre universelle Anwendbarkeit, die leichte Herstellbarkeit stabiler Pigmentpasten, erzielbare Pigmentierungshöhen, erreichbare Farbtonstabilitäten und erreichbare Verbesserungen der Wasserfestigkeit aufgelackter Beschichtungen aus.

## Patentansprüche

1. Block-Polymethacrylsäureester-Block-Polyalkylenoxid-Copolymeres mit terminaler Carbonsäure der allgemeinen Formel I 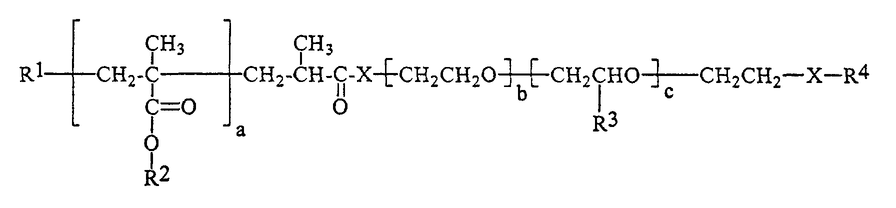 wobei
R¹ der Rest eines an sich bekannten Kettenreglers oder Initiators ist, der frei von aktiven Wasserstoffatomen ist,
R² gleich oder verschieden sind und Alkylreste mit 1 bis 22 Kohlenstoffatomen oder ggf. auch substituierte Arylreste, Perfluoralkyl- oder Dialkylaminoreste bedeuten,
R³ gleich oder verschieden sind und Alkylreste mit 1 bis 4 Kohlenstoffatomen oder Phenylreste bedeuten,
R⁴ einen organischen Rest mit mindestens einer Carbonsäure-bzw. Carboxylatfunktion darstellt,
X Sauerstoff oder NH ist,
a einen Wert von 4 bis 20,
b einen Wert von 20 bis 100 und
c einen Wert von 0 bis 20 hat, wobei das Verhältnis b/c >= 4 ist.

2. Block-Polymethacrylsäureester-Block-Polyalkylenoxid-Copolymeres mit terminaler Carbonsäure nach Anspruch 1, **dadurch gekennzeichnet, daß** R² ein Alkylrest mit 1 bis 4 Kohlenstoffatomen ist.

3. Block-Polymethacrylsäureester-Block-Polyalkylenoxid-Copolymeres mit terminaler Carbonsäure nach Anspruch 1, **dadurch gekennzeichnet, daß** X Sauerstoff ist.

4. Block-Polymethacrylsäureester-Block-Polyalkylenoxid-Copolymeres mit terminaler Carbonsäure nach Anspruch 1, **dadurch gekennzeichnet, daß** der Wert von c 0 ist.

5. Block-Polymethacrylsäureester-Block-Polyalkylenoxid-Copolymeres mit terminaler Carbonsäure nach Anspruch 1, **dadurch gekennzeichnet, daß** der Wert von a 6 bis 15 ist.

6. Block-Polymethacrylsäureester-Block-Polyalkylenoxid-Copolymeres mit terminaler Carbonsäure nach Anspruch 1, **dadurch gekennzeichnet, daß** R⁴ einen aliphatischen Rest, insbesondere den Rest -C(O)CH₂CH₂COOH darstellt.

7. Wäßrige Pigmentpräparation, enthaltend wenigstens ein anorganisches oder organisches Pigment und wenigstens ein Block-Polymethacrylsäureester-Block-Polyalkylenoxid-Copolymeres mit terminaler Carbonsäure gemäß Anspruch 1 bis 6 als Dispergiermittel.

8. Wäßrige Pigmentpräparation, enthaltend 1 bis 100 Gew.-%, bezogen auf Pigmente, an Dispergieradditiven gemäß den Ansprüchen 1 bis 6.

9. Verwendung der Block-Polymethacrylsäureester-Block-Polyalkylenoxid-Copolymere mit terminaler Carbonsäure nach den Ansprüchen 1 bis 6 als Verträglichkeitsvermittler in SMC- oder BMC-Formulierungen.

## Claims

1. Block-polymethacrylate-block-polyalkylene oxide copolymer with terminal carboxylic acid, of the general formula I 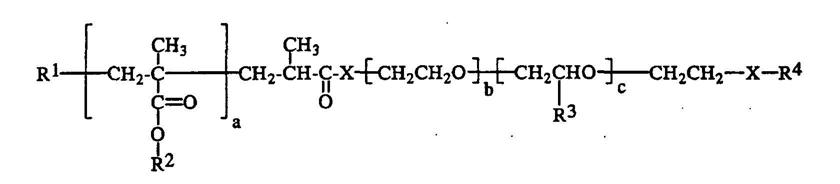 where
R¹ is the radical of a conventional chain regulator or initiator which is free from active hydrogen atoms,
R² are identical or different and are alkyl radicals of 1 to 22 carbon atoms or alternatively, if desired, are substituted aryl radicals, perfluoroalkyl radicals or dialkylamino radicals,
R³ are identical or different and are alkyl radicals of 1 to 4 carbon atoms or phenyl radicals,
R⁴ is an organic radical having at least one carboxylic acid or carboxylate function,
X is oxygen or NH,
a is from 4 to 20,
b is from 20 to 100, and
c is from 0 to 20, the ratio b/c being >= 4.

2. Block-polymethacrylate-block-polyalkylene oxide copolymer with terminal carboxylic acid according to Claim 1, **characterized in that** R² is an alkyl radical of 1 to 4 carbon atoms.

3. Block-polymethacrylate-block-polyalkylene oxide copolymer with terminal carboxylic acid according to Claim 1, **characterized in that** X is oxygen.

4. Block-polymethacrylate-block-polyalkylene oxide copolymer with terminal carboxylic acid according to Claim 1, **characterized in that** c is 0.

5. Block-polymethacrylate-block-polyalkylene oxide copolymer with terminal carboxylic acid according to Claim 1, **characterized in that** a is from 6 to 15.

6. Block-polymethacrylate-block-polyalkylene oxide copolymer with terminal carboxylic acid according to Claim 1, **characterized in that** R⁴ is an aliphatic radical, especially the radical -C(O)CH₂CH₂COOH.

7. Aqueous pigment preparation comprising at least one organic or inorganic pigment and at least one block-polymethacrylate-block-polyalkylene oxide copolymer with terminal carboxylic acid according to Claim 1 to 6 as dispersants.

8. Aqueous pigment preparation containing from 1 to 100% by weight, based on pigments, of dispersing additives according to Claims 1 to 6.

9. Use of the block-polymethacrylate-block-polyalkylene oxide copolymer with terminal carboxylic acid, according to Claims 1 to 6, as a compatibilizer in SMC or BMC formulations.

## Revendications

1. Copolymère de blocs de poly(ester de l'acide méthacrylique) et de blocs de poly(oxyde d'alkylène) présentant un acide carboxylique terminal de formule générale I 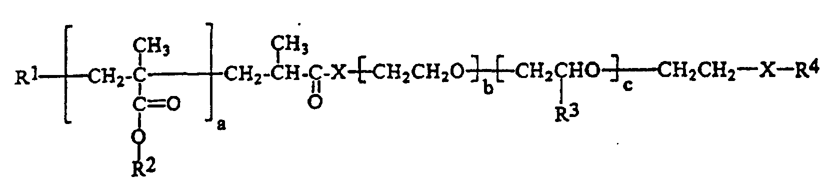 où
R¹ est le radical d'un régulateur de chaîne ou d'un initiateur connu en soi, qui est exempt d'atomes d'hydrogène actifs,
R² sont identiques ou différents et signifient des radicaux alkyle comprenant 1 à 22 atomes de carbone ou, le cas échéant, également des radicaux aryle substitués, des radicaux perfluoroalkylamino ou dialkylamino,
R³ sont identiques ou différents et signifient des radicaux alkyle comprenant 1 à 4 atomes de carbone ou des radicaux phényle,
R⁴ représente un radical organique présentant au moins une fonction acide carboxylique ou, selon le cas, carboxylate,
X représente un oxygène ou NH,
a a une valeur de 4 à 20,
b a une valeur de 20 à 100 et
c a une valeur de 0 à 20, le rapport b/c étant ≥ à 4.

2. Copolymère de blocs de poly(ester de l'acide méthacrylique) et de blocs de poly(oxyde d'alkylène) présentant un acide carboxylique terminal selon la revendication 1, **caractérisé en ce que** R² est un radical alkyle comprenant 1 à 4 atomes de carbone.

3. Copolymère de blocs de poly(ester de l'acide méthacrylique) et de blocs de poly(oxyde d'alkylène) présentant un acide carboxylique terminal selon la revendication 1, **caractérisé en ce que** X représente un oxygène.

4. Copolymère de blocs de poly(ester de l'acide méthacrylique) et de blocs de poly(oxyde d'alkylène) présentant un acide carboxylique terminal selon la revendication 1, **caractérisé en ce que** la valeur de c est 0.

5. Copolymère de blocs de poly(ester de l'acide méthacrylique) et de blocs de poly(oxyde d'alkylène) présentant un acide carboxylique terminal selon la revendication 1, **caractérisé en ce que** la valeur de a est 6 à 15.

6. Copolymère de blocs de poly(ester de l'acide méthacrylique) et de blocs de poly(oxyde d'alkylène) présentant un acide carboxylique terminal selon la revendication 1, **caractérisé en ce que** R⁴ représente un radical aliphatique, en particulier le radical -C(O)CH₂CH₂COOH.

7. Préparation aqueuse de pigments, contenant au moins un pigment inorganique ou organique et au moins un copolymère de blocs de poly(ester de l'acide méthacrylique) et de blocs de poly(oxyde d'alkylène) présentant un acide carboxylique terminal selon les revendications 1 à 6 comme dispersant.

8. Préparation aqueuse de pigments contenant 1 à 100% en poids par rapport aux pigments d'additifs dispersants selon les revendications 1 à 6.

9. Utilisation des copolymères de blocs de poly(ester de l'acide méthacrylique) et de blocs de poly(oxyde d'alkylène) présentant un acide carboxylique terminal selon les revendications 1 à 6 comme adjuvant de compatibilité dans des formulations SMC ou BMC.
